# EUROPÄISCHE PATENTSCHRIFT

(11) **EP 3 103 712 B1**
(45) Veröffentlichungstag und Bekanntmachung des Hinweises auf die Patenterteilung: **24.07.2019**
(21) Anmeldenummer: 16173889.3
(22) Anmeldetag: 10.06.2016
(51) Int. Cl.: B62K 3/00

(54) **FALTBARER ROLLER**
FOLDABLE SCOOTER
SCOOTER PLIABLE

(30) Priorität: 10.06.2015 DE 202015103008 U
(43) Veröffentlichungstag der Anmeldung: 14.12.2016
(73) Patentinhaber: Rhein-Nadel Automation GmbH, 52068 Aachen (DE)
(72) Erfinder: Pavel, Klaus, 4730 Hauset (BE)
(74) Vertreter: Jostarndt Patentanwalts-AG

(56) Entgegenhaltungen:
- WO-A1-01/05646
- WO-A1-2009/141629
- DE-U1- 9 318 018
- DE-U1- 9 403 583

## Beschreibung

### Gebiet der Erfindung

Die Erfindung bezieht sich auf einen faltbaren Rollers, der ziehharmonika-ähnlich zusammenfaltbar ist und auf ein Verfahren zum Auseinanderfalten des faltbaren Rollers.

### Hintergrund der Erfindung

Roller werden meistens zur schnelleren Fortbewegung auf kurzen Fahrstrecken verwendet, wobei die Roller oft als unterstützendes Fortbewegungsmittel auf Teilstecken eingesetzt werden. Für die anderen Teilstrecken einer Gesamtstrecke werden oft andere Verkehrsmittel benutzt, so dass der Roller in den anderen Verkehrsmittels mitgeführt werden muss. Daher wäre es wünschenswert, Roller im unbenutzten Zustand in einem möglichst kleinen Volumen in den Verkehrsmitteln mitführen zu können. Roller besitzen ein ausgedehntes Trittbrett und einen entsprechenden Lenker, die die Größe des Rollers bestimmen. Es wäre daher wünschenswert, Lenker und Trittbrett während des Transports im ungenutzten Zustand ein einen kompakteren Zustand im Vergleich zum Fahrzustand überführen zu können.

EP 2 339 773 B1 offenbart einen Roller, in dessen Rahmen vor und hinter der Trittbrett zwei Scharniergelenke mit gleichem Drehsinn angeordnet sind, so dass das Hinterrad über das Trittbrett geklappt werden kann und der Vorderteil des Rollers mit Vorderrad und Lenker ebenfalls über das Trittbrett und das Hinterrad geklappt werden kann. Der Klappmechanismus ermöglicht zwar eine merkliche Reduzierung der Länge des Rollers, allerdings ist der Roller im zusammengeklappten Zustand nicht mehr fahrbar und muss daher für einen Transport gegebenenfalls getragen werden. Außerdem ist zumindest das Hinterrad im geklappten Zustand oberhalb des Trittbretts angeordnet, sodass ein schmutziger oder nasser Reifen das Trittbrett verschmutzen kann. Um den Roller ferner kompakt zu transportieren oder zu verstauen, muss zudem der Lenker mit zusätzlichem Aufwand demontiert und später wieder montiert werden, sodass der Roller nicht durch eine einfache Handbewegung leicht zusammengeklappt und wieder fahrbar aufgeklappt werden kann.

Es ist daher wünschenswert, einen Roller zur Verfügung zu haben, der mittels eines einfach zu handhabenden Prinzips zu einem deutlich reduzierten Stauvolumens zusammengeklappt und wieder aufgeklappt werden kann, wobei Trittbrett dennoch vor Verschmutzungen durch die Räder geschützt ist.

Dokument WO2009/141629A1 offenbart die Präambel des Anspruchs 1.

### Zusammenfassung der Erfindung

Es ist dabei eine Aufgabe der vorliegenden Erfindung, einen Roller bereitzustellen, der mittels eines einfach zu handhabenden Prinzips zu einem deutlich reduzierten Stauvolumens zusammengeklappt und wieder aufgeklappt werden kann, wobei Trittbrett dennoch vor Verschmutzungen durch die Räder geschützt ist.

Diese Aufgabe wird gelöst durch einen faltbaren Roller zur Verkürzung eines Radabstands im gefalteten Zustand mit einem Trittbrett, das mindestens drei Scharniere zum ziehharmonika-ähnlichen Zusammenfalten des Rollers umfasst.

Der Begriff "Roller" bezeichnet hierbei ein zweirädriges Kleinfahrzeug mit einem bodennahen Trittbrett, auf dem sich eine Person gegebenenfalls stehend fortbewegen kann. Der Roller kann dabei zusätzlich eine Sitzgelegenheit für den Fahrer umfassen. Der Begriff "Roller" umfasst dabei Tretroller, Wipproller und Motorroller und kann je nach Ausführungsform durch Abstoßen mit einem Bein (Tretroller), durch gewichtsverlagernde Wippbewegungen über einen mechanischen Antrieb (Wipproller) oder durch Motorkraft (Motorroller) angetrieben werden. Der Roller wird alternativ auch als Scooter oder Kickboard bezeichnet. Roller können dabei jeweils ein Vorder- und ein Hinterrad besitzen. In manchen Ausführungsformen besitzen die Roller auch mehr als ein Vorderrad oder mehr als ein Hinterrad. Der Roller kann dabei aus unterschiedlichen Materialien gefertigt sein. Beispielsweise kann der Roller Teile aus Holz, Carbon (kohlenfaserverstärktem Kunststoff) oder Metall (Aluminium, Stahl) umfassen.

Sehr leichte Roller umfassen mit Ausnahme der Reifen der Räder überwiegend oder ausschließlich Teile aus Carbon. Dadurch lassen sich sogar motorangetriebene Roller mit einem Gewicht unter 10kg (ohne Batterie für den Motorantrieb) herstellen. Der Radabstand ist der Abstand zischen den Drehachsen der Vorder- und Hinterräder bei paralleler Ausrichtung der Drehachsen.

Faltbar bezeichnet hier die Eigenschaft, Teile, die über ein Scharnier mit einer Drehachse miteinander verbunden sind, aneinander zu klappen. Ziehharmonika-ähnlich bezeichnet einen Faltmechanismus, bei dem die Scharniere zumindest teilweise beim Zusammenfalten mit entgegengesetztem Drehsinn gedreht werden. Die nachfolgenden Beispiele werden alle vom Begriff "ziehharmonika-ähnlich" umfasst. Beispielsweise werden beim Zusammenfalten des erfindungsgemäßen Rollers die Scharniere jeweils außen am Trittbrett im Uhrzeigersinn nach links (linksdrehend) und das Scharnier dazwischen bei einem Trittbrett mit drei Scharnieren im Uhrzeigersinn nach rechts (rechtsdrehend) gedreht. Bei einer ungradzahligen Anzahl an Scharnieren im Trittbrett sind beispielsweise die ungradzahligen Scharniere als linksdrehend und die gradzahlingen Scharniere als rechtsdrehend vorgesehen. Bei einer gradzahligen Anzahl an Scharnieren können die Scharniere jeweils abwechselnd als rechtsdrehende Scharniere und als linksdrehende Scharniere angeordnet sein. Bei beispielsweise vier Scharnieren im Trittbrett können auch die jeweils äußeren Scharniere als linksdrehend und die beiden anderen Scharniere als rechtsdrehend angeordnet sein. In einer alternativen Ausführungsform kann der Drehsinn der vier Scharniere auch genau andersherum ausgestaltet sein.

Durch das erfindungsgemäße ziehharmonika-ähnliche Zusammenfalten des Trittbretts wird der Radabstand des Rollers im zusammengefalteten Zustand stark verkürzt, so dass der zusammengefaltete Roller kompakt transportiert werden kann. Das ziehharmonika-ähnliche Zusammenfalten stellt obendrein sicher, dass das die Räder beim zusammengefalteten Roller weiterhin vor und hinter dem zusammengefalteten Trittbrett angeordnet sind, wobei "vor" und "hinter" in Fahrtrichtung des Rollers zu verstehen ist. Die Lauffläche der Räder bleibt dadurch weiterhin unterhalb des zusammengefalteten Trittbretts angeordnet, sodass die Räder das Trittbrett im zusammengefalteten Zustand nicht verdrecken können. Dadurch dass die Räder weiterhin in ihrer Fahrposition verbleiben, kann der Roller auch im zusammengefalteten Zustand geschoben werden, wodurch ein mühsames Tragen des Rollers durch den Fahrer entfallen kann. Der erfindungsgemäße Roller ist somit mittels eines einfach zu handhabenden Prinzips zu einem deutlich reduzierten Stauvolumens zusammenklappbar und wieder aufklappbar, wobei Trittbrett dennoch vor Verschmutzungen durch die Räder geschützt ist.

In einer Ausführungsform sind Rahmenteile des Rollers vor und hinter dem Trittbrett mit mindestens einem unter dem Trittbrett durchgeführten Seil mit einer geeigneten Seilspannung verbunden. Hierbei sind die Begriffe "vor" und "hinter" in Fahrtrichtung zu sehen. Der Begriff "Seil" bezeichnet hier ein längliches, biegeschlaffes, elastisches Element, das zur Übertragung von Zugkräften verwendet wird. Das Seil kann einteilig oder zusammengedreht aus mehreren Litzen ausgeführt sein. Dieses Seil ermöglicht die Stabilisierung des gestreckten Trittbetts gegen ein Durchbiegen in Belastungsrichtung des Trittbretts. Die Belastungsrichtung ist dabei die Richtung senkrecht zur Lauffläche (oder Boden), auf dem der Roller fährt. Der Begriff "unter dem Trittbrett" bezeichnet die Anordnung des Seils näher zur Lauffläche als das Trittbrett selbst. In einer bevorzugten Ausführungsform umfasst jedes Seil ein geeignetes elastisches Mittel, vorzugsweise eine Feder. Dadurch wird eine federnde Stützung des Trittbretts ermöglicht. Der Begriff "gestrecktes Trittbrett" bezeichnet das Trittbrett im auseinandergeklappten fahrbaren Zustand, also im Normalzustand, wobei der zusammengefaltete Zustand des Rollers der Transportzustand ist.

In einer weiteren Ausführungsform umfasst zumindest das mittlere Scharnier oder zumindest eines der mittleren Scharniere einen elastischen Streifen zur Federung des Trittbretts im gestreckten Zustand. Der elastische Streifen kann beispielsweise aus Gummi gefertigt sein. Das oder die mittleren Scharniere bezeichnen alle Scharniere, die zwischen den beiden jeweils äußeren Scharnieren (in Fahrtrichtung das vorderste und das hinterste Scharnier) am Trittbrett angeordnet sind.

In einer weiteren Ausführungsform umfassen die Scharniere jeweils einen Anschlag, der verhindert, dass das Trittbrett oder Abschnitte des Trittbretts über den gestreckten Zustand hinaus weiter in Richtung des Bodens unterhalb des Trittbretts bewegt werden können. Beispielsweise kann der Anschlag durch eine Lasche, die sich über das Scharnier herüber erstreckt, gebildet werden, die mittels Kontakt mit dem Trittbrett oder einen dafür vorgesehenen Rahmenteil auf der anderen Seite des Scharniers verhindert, dass das Scharnier weiter gedreht werden kann. Dadurch wird das Trittbrett auf einfache Weise ohne zusätzlich durchzuführende Befestigungsschritte im Normalzustand stabilisiert, sodass der Roller gefahrlos, d.h. ohne Gefahr eines ungewollten Zusammenfaltens des Trittbretts, gefahren werden kann. Die entgegengesetzte Bewegung des Trittbretts in Faltbewegung wird durch das von oben auf dem Trittbrett ruhende Gewicht des Fahrers verhindert.

In einer weitern Ausführungsform sind zumindest die jeweils äußeren beiden benachbarten Scharniere des Trittbretts im entgegengesetzten Drehsinn drehbar ausgestaltet. Dadurch wird eine ziehharmonika-ähnliche Faltung des Trittbretts und damit des Rollers unabhängig von der Anzahl der dazwischen angeordneten Scharniere erlaubt. In einer bevorzugten Ausführungsform sind alle jeweils benachbarten Scharniere des Trittbretts im entgegengesetzten Drehsinn drehbar um deren Drehachsen ausgestaltet. Dadurch wird die kompakteste Form des Rollers mit minimalstem Radabstand bei Anwendung eines ziehharmonika-ähnlichen Zusammenfaltens erreicht. Gleichzeitig sind die benachbarten Trittflächen im zusammengefalteten Zustand parallel zueinander ausgerichtet, sodass ein Verdrecken der Trittfläche durch die Räder im gefalteten Zustand vollständig ausgeschlossen wird.

In einer Ausführungsform umfasst das Trittbrett geeignete Mittel zur Fixierung des Trittbretts im gestreckten Zustand. Dadurch wird die Gefahr eines ungewollten Zusammenfaltens des Trittbretts selbst dann vermieden, wenn das Gewicht des Fahrers nicht auf dem Trittbrett lastet, beispielsweise nach Überfahren eines Hügels, Kantsteins etc. In einer bevorzugten Ausführungsform ist das geeignete Mittel eine Schiebeverriegelung, die in einer Fixierungsposition über das Scharnier übergreift und im Trittbrett auf beiden Seiten des Scharniers geführt gelagert ist. Der Fachmann kann geeignete Schiebeverriegelung im Rahmen der vorliegenden Erfindung auswählen.

In einer weiteren Ausführungsform weist zumindest ein Scharnier ein erstes Übersteckmittel zum seitlichen Überstecken über das Trittbrett im gestreckten Zustand auf. Ein solches erstes Übersteckmittel kann beispielsweise als eine u-förmige Hülse ausgeführt sein, die mit dem Trittbrett beweglich verbunden oder an ihm beweglich gelagert ist.

In einer weiteren Ausführungsform sind die Drehachsen der Scharniere im Wesentlichen parallel zur Drehachse der nicht-lenkbaren Achse des Rollers angeordnet. Dadurch kann der Roller im zusammengefalteten Zustand spurtreu auf den Rädern geschoben werden. Der Begriff im Wesentlichen erlaubt die Abweichung der mathematisch exakten parallelen Ausrichtung um wenige Grad, beispielsweise den Bereich 0° ± 2° oder weniger.

In einer weiteren Ausführungsform weist zumindest das mittlere Scharnier oder eines der mittleren Scharniere ein zweites Übersteckmittel zum seitlichen Überstecken über das Trittbrett im gefalteten Zustand aufweist. Damit kann auf einfache Weise der Roller im zusammenfalteten Zustand gesichert werden. Ein solches zweites Übersteckmittel kann beispielsweise als eine u-förmige Hülse ausgeführt sein, die mit dem Trittbrett beweglich verbunden ist.

In einer weiteren Ausführungsform umfasst der Roller einen klappbaren Lenker mit einem ersten Klappgelenk, wobei das erste Klappgelenk so am Lenker angeordnet ist, dass der Lenker im gefalteten Zustand des Rollers über das ziehharmonika-ähnliche zusammengefaltete Trittbrett in Richtung des Hinterrads des Rollers gelegt werden kann. Damit kann der Roller noch kompakter zusammengefaltet werden, da der sonst sperrige Lenker nahe oberhalb des Trittbretts entlanggeführt werden kann. In einer bevorzugten Ausführungsform umfasst der Lenker des Weiteren ein Arretierungsmittel zur Fixierung des Lenkers in einer aufrechten Fahrposition. Damit kann der Roller trotz Kippgelenk am Lenker sicher gefahren werden. In einer weiteren Ausführungsform ist dabei das Arretierungsmittel eine bis zu einer Endposition über das erste Klappgelenkt verschiebbare Hülse, wobei die Hülse in der Endposition zur Fixierung des Lenkers vorgesehen ist. Damit ist der zusammengefaltete Roller inklusive Lenker ebenfalls mit einer einfachen Handhabung zusammenfaltbar und wieder aufrichtbar.

In einer weiteren Ausführungsform umfasst der Roller eine Hinterradverkleidung über dem Hinterrad. Hierbei ist in einer Ausführungsform der Roller ein motorangetriebener Roller und umfasst eine Batterie zum Antrieb eines Motors angeordnet auf der Hinterradverkleidung. Eine für einen Motorroller geeignete Batterie besitzt beispielsweise 15Ah bei einem Eigengewicht von ca. 4kg. Die Hinterradverkleidung kann sich auch seitlich zum Teil über das Hinterrad erstrecken. Ebenso kann das Vorderrad eine Vorderradverkleidung besitzen, die sich gegebenenfalls auch seitlich zum Teil über das Vorderrad erstreckt.

In einer weiteren Ausführungsform umfasst der Roller ein Fixierungsmittel zur Fixierung des Lenkers im geklappten Zustand, wobei das Fixierungsmittel mit dem Hinterrad über geeignet Mittel fest verbunden ist. Somit kann der Lenker einfach in seiner Richtung fixiert werden, sodass das die Drehachse des Vorderrads im zusammengefalteten Zustand nicht gedreht werden kann und der Roller in zusammengefalteten Zustand spurtreu geschoben werden kann. In einer bevorzugten Ausführungsform ist das Fixierungsmittel dabei auf der Hinterradverkleidung angeordnet, was den Roller noch weiter kompakt gestaltet.

In einer weiteren Ausführungsform umfasst der Lenker eine Griffstange, die an beiden Seiten der Griffstange zu den Lenkergriffen hin jeweils ein arretierbares zweites Klappgelenk umfasst, sodass die Lenkergriffe im geklappten Zustand des Lenkers über die jeweiligen zweiten Klappgelenke zur Fixierung des Lenkers an der Hinterradverkleidung vorgesehen sind. Damit kann der Lenker selbst bei Stößen nicht aus seiner vorgesehenen arretierten Position im zusammengefalteten Zustand des Rollers unerwünscht entfernt werden.

### Kurze Beschreibung der Abbildungen

Diese und andere Aspekte der Erfindung werden im Detail in den Abbildungen wie folgt gezeigt:
- Fig.1:: eine Ausführungsform des erfindungsgemäßen Rollers in Seitenansicht in (a) Fahrposition und (b) im zusammengefalteten Zustand;
- Fig.2.: eine Ausführungsform des Trittbretts mit Mitteln zur Fixierung des Trittbretts (a) im gefalteten Zustand und (b) im gestreckten Zustand;
- Fig.3:: das Trittbrett in Draufsicht von oben mit Drehachsen der Räder und der Scharniere;
- Fig.4:: eine Ausführungsform des gestreckten Trittbretts mit einem ersten Übersteckmittel (a) im nicht fixierten Zustand und (b) im fixierten Zustand;
- Fig.5:: eine Ausführungsform des Trittbretts im zusammengefalteten Zustand mit einem zweiten Übersteckmittel zur Fixierung des Trittbretts im zusammengefalteten Zustand;
- Fig.6:: eine Ausführungsform des erfindungsgemäßen Rollers im zusammengefalteten Zustand mit Fixierungsmittel für den Lenker;
- Fig.7:: eine Ausführungsform des erfindungsgemäßen Rollers mit klappbaren Lenkergriffen in (a) einer Frontalansicht mit Lenker in der Fahrposition und (b) in Seitenansicht mit dem Lenker in zusammengefalteter Position.

### Detaillierte Beschreibung der Ausführungsbeispiele

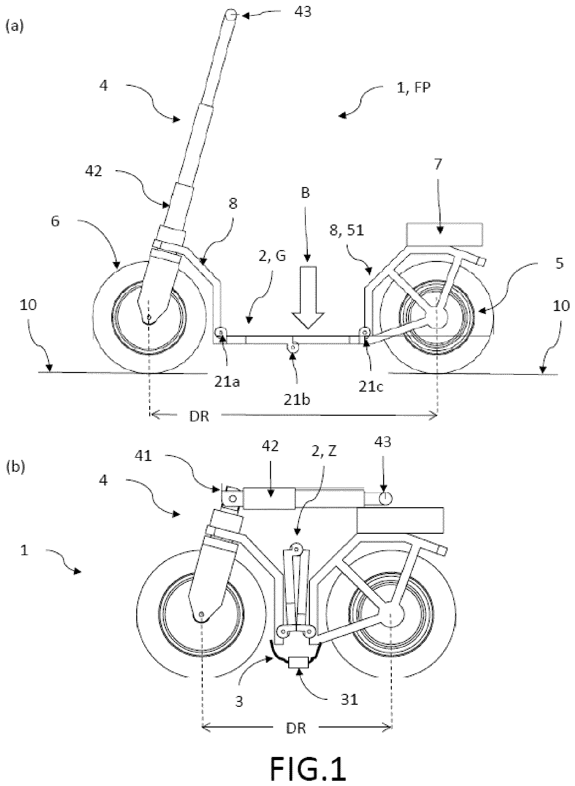

Fig. 1 zeigt in Seitenansicht einen faltbaren Roller 1 zur Verkürzung eines Radabstands DR im gefalteten Zustand Z mit einem Trittbrett 2, das in dieser Ausführungsform drei Scharniere 21a, 21b, 21c umfasst. In Fig.1(a) ist das Trittbrett 2 in gestrecktem Zustand G und der Roller 1 in Fahrposition FP auf einem Untergrund (Boden) 10 dargestellt, während in Fig.1(b) das Trittbrett 2 ziehharmonika-ähnlichen zusammengefaltet Z ist. Der erfindungsgemäße Roller umfasst hier ein Vorderrad 6, ein Hinterrad 5, einen Rahmen 8 vor und hinter dem Trittbrett 2, einen Lenker 4, eine Hinterradverkleidung 51 über dem Hinterrad 5, und eine auf der Hinterradverkleidung 51 in einem entsprechenden Halter (hier nicht im Detail gezeigt) angeordnete Batterie 7 für diesen maschinengetrieben Roller 1, wobei der Motor hier nicht gezeigt ist. Ein solcher Motor kann beispielsweise ein 250W/36V-Motor mit einem geräuschlosen Getriebe sein. Die Batterie ist beispielsweise ein austauschbarer Einschubakkumulator mit einer Kapazität von bis zu 20Ah. Die Batterie kann dabei auch eine Heckleuchte des Rollers, sofern vorhanden, speisen. In anderen Ausführungsformen kann der erfindungsgemäße Roller 1 auch beispielsweise ein Tretroller 1 ohne eine solche Batterie 7 sein. Diese Batterie kann durch Hineinstecken in ihre vorgesehene Position auch automatisch mit dem Motor oder einer Motorsteuerung verbunden werden. Der Roller 1 kann zusätzlich mit Vorderrad- und/oder Hinterradbremsen versehen sein. Zusätzlich kann der Roller 1 auch einen Ständer zum Abstellen des Rollers 1 in Fahrposition FP umfassen. Bei einem motorgetriebenen Roller 1 kann ein Geschwindigkeitsregler am Lenker 4 angeordnet sein. Gleichermaßen kann der Ständer auch zum Abstellen des Rollers 1 im zusammengefalteten Zustand Z verwendet werden, beispielsweise beim Transport im Kofferraum eines anderen Fahrzeugs. In anderen Ausführungsformen kann der Roller 1 an der Vorder- oder Hinterachse auch mehr als ein Rad 5, 6 besitzen, beispielsweise kann die Hinterachse mit Stützrädern als zusätzliche Hinterräder 5 versehen sein. In einer Ausführungsform können diese Stützräder separat vom Hinterrad 5 seitlich im Trittbrett 2 (vorzugsweise beidseitig) eingesteckt werden, beispielsweise über einen geeigneten Schnellverschluss. Dazu umfasst das Trittbrett 2 beispielsweise im Abstand von 15cm an dessen hinterem Ende (Seite zum Hinterrad 5) nebeneinanderliegenden Bohrungen quer zur Fahrtrichtung. Als alternative Halterung für die Stützräder können eine oder mehrere Rohre mit einer Länge von beispielsweise 40cm dienen, die senkrecht zur Fahrtrichtung des Rollers 1 am Trittbrett 2 angeordnet sind, indem sie in die obigen Bohrungen geschoben werden und auf jeder Seite des Trittbretts 2 seitlich 10cm über dieses überstehen. Das Rohr als Achse hat einen Durchmesser, der so angepasst ist, dass der das Zusammenfalten des Trittbretts 2 nicht beeinflusst. Vorzugsweise befindet sich das Rohr im Zwischenraum der beiden zueinander zugewandten Teile des Trittbretts2 im zusammengefalteten Zustand. Der überstehende Teil von 10cm des Rohres kann die Stützräder aufnehmen und haltern. Vorzugsweise sind die Stützräder und deren Halterung (Bohrung oder Rohr) hinter dem hinteren Scharnier 21c (Richtung Hinterrad 5) angeordnet, sodass das Auf- und Absteigen vom Roller 1 nicht behindert wird. Das Rohr für die Stützräder kann dabei mittels Klemmung oder Schnellverschluss am Trittbrett 2 befestigt werden, beispielsweise auch mittels Bolzen von oben mit dem Trittbrett 2. Um im zusammengefalteten Zustand eine maximale Breite des zusammengefalteten Rollers 1 von 20cm zu gewährleisten, sind die Stützräder und/oder die Rohre abnehmbar ausgestaltet. In einer Ausführungsform können die abgenommenen Stützräder mittels geeigneter Mittel beispielsweise auf die umgeklappte Lenkstange aufgesteckt werden.

In einer anderen Ausführungsform können die Vorder- und Hinterräder über einen Schnellverschluss für einen noch kompakteren Transport demontiert werden. Im zusammengefalteten Zustand Z ist zusätzlich zum ziehharmonika-ähnlich zusammengefalteten Trittbrett 2 auch der Lenker 4 mittels eines ersten Klappgelenks 41 auf die Hinterradverkleidung 51 gelegt, damit der Roller 1 möglichst kompakt zusammengefaltet ist. In dieser Ausführungsform sind die Rahmenteile 8 des Rollers 1 vor und hinter dem Trittbrett 2 mit mindestens einem unter dem Trittbrett 2 durchgeführten Seil 3 mit einer geeigneten Seilspannung zur Stabilisierung des gestreckten Trittbetts 2 gegen ein Durchbiegen in Belastungsrichtung B des Trittbretts 2 verbunden ist. Durch die Seilspannung ist das Seil 3 in Fig.1(a) nicht explizit sichtbar, wogegen das Seil 3 in Fig.1(b) aufgrund des verkürzten Radabstands DR und damit auch aufgrund des verkürzten Abstands zwischen den Rahmenteilen 8 vor und hinter dem Trittbrett herunterhängt und somit in dieser Darstellung sichtbar ist. Das Seil umfasst hier zusätzlich eine Feder 31 als elastisches Mittel zur Spannung des Seils bei gestrecktem Trittbrett 2. In anderen Ausführungsformen können auch zwei oder mehr Seile 3 verwendet werden. Beispielsweise werden das oder die Seile 3 jeweils durch ein 90°-Winkelprofil, beispielsweise aus Aluminium, geführt. In diesem Fall würde das oder die Seile 3 im zusammengefalteten Zustand Z des Rollers 1 nicht wie in Fifg.1 (b) herunterhängen. In einer alternativen Ausführungsform umfasst der Roller 1 an geeigneten Positionen schlitzförmige Seilaufnahmen, die ein Herunterhängen des Seils 3 im zusammengefalteten Zustand Z verhindern. Um den Roller möglichst leicht zu gestalten, können die weiteren Teile beispielsweise aus Carbon gefertigt sein. In dieser Ausführungsform ist der Lenker 4 des Rollers als klappbarer Lenker 4 mit einem ersten Klappgelenk 41 ausgeführt, wobei das erste Klappgelenk 41 so am Lenker 4 angeordnet ist, dass der Lenker 4 im gefalteten Zustand Z des Rollers 1 über das zieharmonika-ähnliche zusammengefaltete Trittbrett 2 in Richtung des Hinterrads 5 des Rollers 1 gelegt werden kann. Der sonst hochstehende Lenker liegt nun kompakt auf dem zusammengefalteten Rest des Rollers auf und besitzt ein minimales Stau- bzw. Transportvolumen. Damit der Lenker während des Fahrbetriebs sicher in seiner aufrechten Position verbleibt und nicht durch das Klappgelenkt während des Fahrens umklappen kann, umfasst der Lenker 4 ein Arretierungsmittel 42 zur Fixierung des Lenkers 4 in einer aufrechten Fahrposition FP. Das Arretierungsmittel 42 ist hier eine bis zu einer Endposition über das erste Klappgelenkt 41 verschiebbare Hülse 42, wobei die Hülse 42 in der Endposition (unten) zur Fixierung des Lenkers 4 vorgesehen ist. Der Lenker 4 kann zusätzlich eine in ihrer Höhe arretierbare Lenkerstange umfassen. Die höhenverstellbare Lenkstange besitzt beispielsweise einen Schnellverschluss zur schnellen Einstellung und Arretierung der gewünschten Lenkerhöhe. Zusätzlich zu der hier gezeigten Ausführungsform kann der Roller 1 eine hier nicht explizit gezeigte Sitzgelegenheit, beispielsweise einen Sattel, oberhalb des Hinterrades 5 umfassen. Der Sattel kann beispielsweise über eine Teleskopstange höhenverstellbar ausgestaltet sein, die sich gegen die Hinterradverkleidung 52 abstützt. Ein zusätzliches Gelenk in dieser Teleskopstange kann den Sattel kipp- oder verschiebbar ausgestalten. Beispielsweise kann der höhenverstellbare Sattel (oder Sitzstock) unten am hinteren Ende des Trittbretts 2 in einem Ring, der auf diesem entsprechend befestigt (verklebt) ist, fixiert werden. Eine weitere Fixierung des Sattels / Sitzstocks weiter oberhalb erfolgt durch eine Bohrung im Rahmen, die dem Durchmesser des Sattels / Sitzstocks entspricht, durch die der Sattel / Sitzstock gesteckt und somit geführt wird. Diese Bohrung kann auf geeignete Weise auf der verlängerten Aufnahmevorrichtung für die Batterie (Akku) angeordnet und mit weiteren Fixierungsmitteln versehen sein.

Das Zusammenfalten des Rollers 1 kann ohne jegliches Werkzeug innerhalb weniger Sekunden durch leichten Druck von unten gegen das mittlere Scharnier 21b, beispielsweise per Fuß des Fahrers, durchgeführt werden, optional gefolgt von einem Umklappen des Lenkers 4 in die in Fig.1(b) gezeigte Position. Auch hier muss lediglich die Hülse 42 angehoben werden, um dadurch das erste Klappgelenk 41 zu entriegeln. Nach Entriegelung kann der Lenker 4 mittels einer einfachen Bewegung in die waagerechte Position oberhalb des zusammengefalteten Trittbretts 2 gebracht werden. Zum Aufrichten des Lenkers 4 in Fahrposition FP und Auseinanderfalten des Trittbretts in den gestreckten Zustand G brauchen obige Handlungen nur in umgekehrter Reihenfolge ausgeführt werden, was ebenfalls ohne Werkzeug in wenigen Sekunden möglich ist. Das Zusammenfalten und das Auseinanderfalten dauert für den erfindungsgemäßen Roller jeweils weniger als 10s.

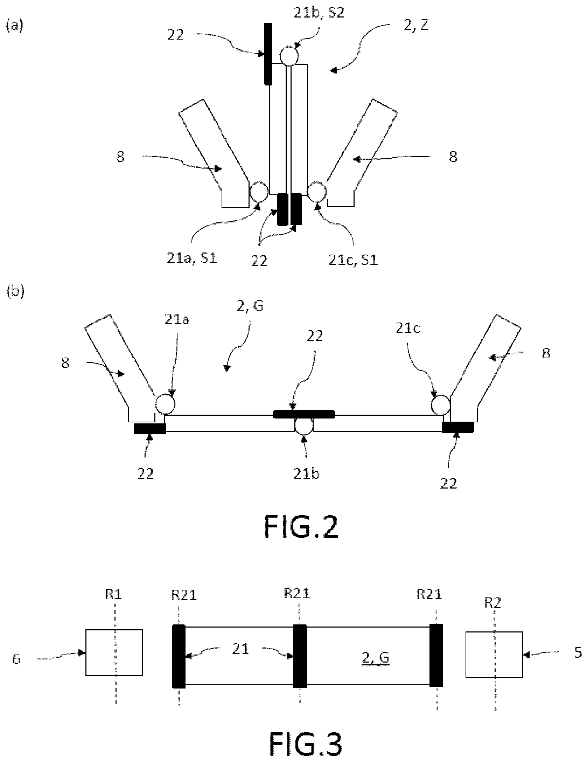

Fig.2 zeigt eine Ausführungsform des Trittbretts mit Mitteln zur Fixierung des Trittbretts (a) im gefalteten Zustand Z und (b) im gestreckten Zustand G. Die Scharniere 21 umfassen jeweils einen Anschlag 22 als geeignetes Mittel zur Fixierung des Trittbretts, der verhindert, dass das Trittbrett 2 oder Abschnitte des Trittbretts 2 über den gestreckten Zustand hinaus weiter in Richtung des Bodens 10 unterhalb des Trittbretts 2 bewegt werden können. Um den hier gezeigten zusammengefalteten Zustand Z erreichen zu können, sind die jeweils äußeren Scharniere 21a, 21c des Trittbretts 2 mit Drehsinn S1 zum mittleren Scharnier 21b mit entgegengesetztem Drehsinn S2 drehbar ausgestaltet. In einer hier nicht gezeigten Ausführungsform mit mehr als drei Scharnieren können alle jeweils benachbarten Scharniere 21 des Trittbretts 2 im entgegengesetzten Drehsinn S1, S2 drehbar um deren Drehachsen R21 ausgestaltet sein. Der hier gezeigte Anschlag 22 ist als starre Materiallasche ausgeführt, die über das jeweilige Scharnier 21b hinausragt und durch Druck auf das Trittbrett 2 auf der anderen Seite des Scharniers 21b oder durch Druck auf ein entsprechend geformtes Rahmenteil 8 ein Durchbiegen des Trittbretts in Belastungsrichtung B verhindert. In einer anderen Ausführungsform kann das geeignete Mittel 22 eine Schiebeverriegelung sein, die wie hier nicht explizit gezeigt in einer Fixierungsposition über das Scharnier 21 übergreift und zusätzlich im Trittbrett 2 auf beiden Seiten des Scharniers 21 geführt gelagert ist.

Fig.3 zeigt das Trittbrett 2 in Draufsicht von oben mit Drehachsen R1, R2, R21 der Räder 5, 6 und der Scharniere 21. In dieser Ausführungsform sind die Drehachsen R21 der Scharniere 21 im Wesentlichen parallel zur Drehachse R2 der nicht-lenkbaren Achse des Rollers, beispielsweise die Drehachse R2 des Hinterrads des Rollers 1 angeordnet. Durch die im Wesentlichen parallele Anordnung kann der Roller 1 besonders kompakt ziehharmonika-ähnlich zusammengefaltet werden und kann dennoch auf den Rädern 5, 6 spurtreu geschoben werden. Vorzugsweise ist das mittlere Scharnier 21b mittig im Trittbrett 2 und unterhalb des Trittbretts 2 angeordnet.

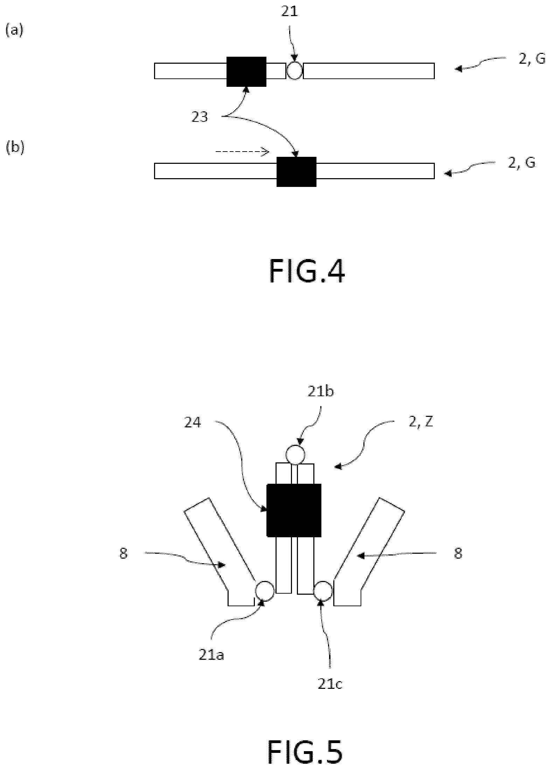

Fig.4 zeigt eine Ausführungsform des Trittbretts 2 im gestreckten Zustand G mit einem ersten Übersteckmittel 23 (a) im nicht fixierten Zustand und (b) im fixierten Zustand. Das Übersteckmittel 23 ist somit eine Ausführungsform eines geeigneten Mittels zur Fixierung des Trittbretts 2 im gestreckten Zustand G. Das erste Übersteckmittel 23 wird in dieser Ausführungsform seitlich über das Scharnier 21 des Trittbretts 2 im gestreckten Zustand G übergesteckt. Hierbei kann das erste Übersteckmittel 23 auf dem Trittbrett 2 geführt gelagert sein und mittels einer seitlichen Schiebebewegung (gestrichelter Pfeil) über das Scharnier 21 geschoben werden. In einer anderen Ausführungsform kann das erste Übersteckmittel 23 lediglich über das Scharnier 12 übergesteckt werden. Dabei kann das erste Übersteckmittel 23 beweglich mit der Trittbrett 2 verbunden sein oder separat vom Trittbrett 2 mitgeführt werden.

Fig.5 zeigt eine Ausführungsform des Trittbretts 2 im zusammengefalteten Zustand Z mit einem zweiten Übersteckmittel 24 zur Fixierung des Trittbretts 2 im zusammengefalteten Zustand Z. Hierbei wird das zweite Übersteckmittel 24 seitlich auf das Trittbrett 2 im gefalteten Zustand Z gesteckt. Dabei kann das zweite Übersteckmittel 24 beweglich mit der Trittbrett 2 verbunden sein oder separat vom Trittbrett 2 mitgeführt werden. In einer alternativen (hier nicht gezeigten) Ausführungsform kann die in Fig.5 gezeigte parallele Fixierung der beiden Trittbretthälften in zusammengeklappten Zustand Z durch das oder die unter dem Trittbrett 2 verlaufenden Seile 3 ausgeführt werden, die einseitig (ein Seil 3) oder beidseitig (zwei Seile 3) durch je zwei schlüssellochähnliche Ösen, die jeweils am unteren Ende der die beiden Räder 5, 6 umgebenden Strukturen zur Aufnahme der Seilenden befestigt sind, geführt werden. Bei zusammengeklapptem Trittbrett 2 werden die beiden lose herunterhängenden Seile 3 durch die schlüssellochähnliche Öse gezogen, gespannt und dann fest eingeklemmt, sodass beide Seile 3 gespannt sind, wodurch ein Auseinanderklappen des zusammengeklappten Trittbretts 3 verhindert wird. Um das Trittbrett 3 zu entfalten und den Roller 1 wieder fahrfertig zu machen, werden das oder die beiden Seile 3 ggf. beidseitig aus der Öse gelöst, sodass sie wieder die für den Fahrzustand gewünschte Länge haben.

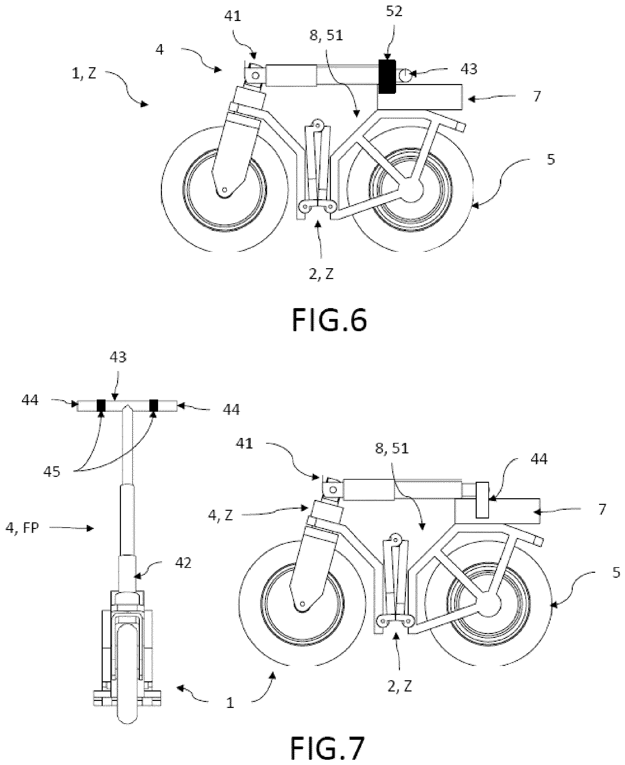

Fig.6 zeigt eine Ausführungsform des erfindungsgemäßen Rollers 1 im zusammengefalteten Zustand Z mit einem Fixierungsmittel 52 für den Lenker 4 zur Fixierung des Lenkers 4 im geklappten Zustand. In dieser Ausführungsform ist das Fixierungsmittel 52 auf der Hinterradverkleidung 51 angeordnet. Ein solches Fixierungsmittel kann beispielsweise eine einfache Klippverbindung oder feststellbare Lasche sein. Sofern auf der Hinterradverkleidung 51 ein Sattel angeordnet ist, kann der Sattel das Fixierungsmittel 52 umfassen oder der Sattel ist selbst als Fixierungsmittel 52 geeignet ausgestaltet.

Fig.7 zeigt eine Ausführungsform des erfindungsgemäßen Rollers 1 mit klappbaren Lenkergriffen 44 in (a) einer Frontalansicht mit Lenker in Fahrposition und (b) in Seitenansicht mit dem Lenker in zusammengefalteter Position Z. Hierbei umfasst der Lenker 4 eine Griffstange 43, die an beiden Seiten der Griffstange 43 zu den Lenkergriffen 44 hin jeweils ein arretierbares zweites Klappgelenk 45 umfasst, sodass die Lenkergriffe 44 im geklappten Zustand Z des Lenkers 4 über die jeweiligen zweiten Klappgelenkte 45 zur Fixierung des Lenkers 4 an der Hinterradverkleidung 51 vorgesehen sind. Dadurch wird der zusammengeklappte Roller 1 auch in seiner Breite durch das Zusammenklappen kompakter, da seine Breite durch die Länge der Griffstange 43 parallel zum Boden 10 bestimmt ist. Dadurch kann beispielsweise ein Roller mit den Massen 1000x1000x360mm auf die Masse 500x450x200mm im zusammengefalteten Zustand Z komprimiert werden.

Das Auseinanderfalten des erfindungsgemäßen Rollers 1 kann beispielsweise folgendermaßen vorgenommen werden:
- Entnehmen des gefalteten Rollers 1, beispielsweise aus einem Fahrzeug oder einer Verpackung,
- Stellen des Rollers 1 auf seine Räder 5,6, vorzugsweise nach Ausklappen eines Ständers des Rollers 1,
- Auseinanderrollen der Räder 5,6, wodurch das Trittbrett 2 ein seinen gestreckten Zustand G gebracht wird,
- Lenker 4 nach oben in seine aufgerichtete Position bringen und arretieren,
- gegebenenfalls zusätzlich die Lenkerhöhe des Teleskoplenkers 4 anpassen,
- gegebenenfalls zusätzlich die Lenkergriffe 44 hochklappen,
- gegebenenfalls den Sitzstock in die Hinterradverkleidung 51 einstecken und arretieren,
- gegebenenfalls Sitzstock oder Sattel auf die gewünschte Höhe und Positionswinkel einstellen und arretieren,
- gegebenenfalls die Batterie 7 in ihre vorgesehene Position einschieben,
- den fahrbereiten Roller 1 fahren.
Das Zusammenfalten des erfindungsgemäßen Rollers 1 geschieht in der umgekehrten Reihenfolge der obigen Schritte.

Die hier gezeigten Ausführungsformen stellen nur Beispiele für die vorliegende Erfindung dar und dürfen daher nicht einschränkend verstanden werden. Alternativen durch den Fachmann in Erwägung gezogene Ausführungsformen sind gleichermaßen vom Schutzbereich der vorliegenden Erfindung umfasst.

### Liste der Bezugszeichen

- 1: erfindungsgemäßer faltbarer Roller
- 2: Trittbrett
- 21: Scharniere
- 21b: mittleres Scharniere
- 21a, 21c: äußere Scharniere
- 22: Mittel zur Fixierung des Trittbretts, Anschlag
- 23: erstes Übersteckmittel (z.B. u-förmige Hülse) zum seitlichen Überstecken über das Trittbrett im gestreckten Zustand
- 24: zweites Übersteckmittel (z.B. u-förmige Hülse) zum seitlichen Überstecken über das Trittbrett im gefalteten Zustand
- 3: Seil zum Verbinden der Konstruktion des Rollers vor und hinter dem Trittbrett miteinander
- 31: geeignetes elastisches Mittel, beispielsweise eine Feder
- 4: Lenker
- 41: erstes Klappgelenk
- 42: Arretierungsmittel (z.B. verschiebbare Hülse)
- 43: Griffstange des Lenkers
- 44: Lenkergriff(e)
- 45: zweites Klappgelenk
- 5: Hinterrad (Hinterräder)
- 51: Hinterradverkleidung
- 52: Fixierungsmittel zur Fixierung des Lenkers in geklappten Zustand
- 6: Vorderrad (Vorderräder)
- 7: Batterie (zum Antrieb eines Motors des Rollers)
- 8: Rahmenteile des Rollers, Rahmen
- 10: Boden

- B: Belastungsrichtung des Trittbretts
- DR: Radabstand zwischen Vorderrad (Vorderachse) und Hinterrad (Hinterachse)
- FP: Fahrposition
- G: gestreckter Zustand des Trittbretts
- R1: Drehachse der lenkbaren Achse des Rollers (z.B. Vorderachse)
- R2: Drehachse der nicht-lenkbaren Achse des Rollers (z.B. Hinterachse)
- R21: Drehachsen der Scharniere
- S1, S2: Drehsinn der Scharniere, ggf. entgegengesetzt
- Z: zusammengefalteter Zustand des Trittbretts

## Patentansprüche

1. Ein faltbarer Roller (1) mit Rädern (5, 6) zur Verkürzung eines Radabstands (DR) im gefalteten Zustand mit einem zusammenfaltbaren Trittbrett (2), **dadurch gekennzeichnet,**
**dass** das Trittbrett (2) mindestens drei Scharniere (21) zum ziehharmonika-ähnlichen Zusammenfalten des Rollers (1) umfasst, wobei die Räder (5, 6) beim zusammengefalteten Roller (1) in Fahrtrichtung weiterhin vor und hinter dem zusammengefalteten Trittbrett (2) in Fahrposition verbleiben.

2. Der faltbare Roller (1) nach Anspruch 1,
**dadurch gekennzeichnet,**
**dass** Rahmenteile (8) des Rollers (1) vor und hinter dem Trittbrett (2) mit mindestens einem unter dem Trittbrett (2) durchgeführten Seil (3) mit einer geeigneten Seilspannung zur Stabilisierung des gestreckten Trittbetts (2) gegen ein Durchbiegen in Belastungsrichtung (B) des Trittbretts (2) verbunden ist.

3. Der faltbare Roller (1) nach Anspruch 2,
**dadurch gekennzeichnet,**
**dass** jedes Seil (3) ein geeignetes elastisches Mittel (31), vorzugsweise eine Feder (31), zur federnden Stützung des Trittbretts (2) umfasst.

4. Der faltbare Roller (1) nach einem der Ansprüche 1 bis 3,
**dadurch gekennzeichnet,**
**dass** zumindest das mittlere Scharnier (21b) oder zumindest eines der mittleren Scharniere (21b) einen elastischen Streifen zur Federung des Trittbretts (2) im gestreckten Zustand umfasst.

5. Der faltbare Roller (1) nach einem der Ansprüche 1 bis 4,
**dadurch gekennzeichnet,**
**dass** die Scharniere (21) jeweils einen Anschlag umfassen, der verhindert, dass das Trittbrett (2) oder Abschnitte des Trittbretts (2) über den gestreckten Zustand hinaus weiter in Richtung des Bodens (10) unterhalb des Trittbretts (2) bewegt werden können.

6. Der faltbare Roller (1) nach Anspruch 5,
**dadurch gekennzeichnet,**
**dass** zumindest die jeweils äußeren beiden benachbarten Scharniere (21a, 21b, 21c) des Trittbretts (2) im entgegengesetzten Drehsinn drehbar ausgestaltet sind, vorzugsweise sind alle jeweils benachbarten Scharniere (21a, 21b, 21c) des Trittbretts (2) im entgegengesetzten Drehsinn (S1, S2) drehbar um deren Drehachsen (R21) ausgestaltet.

7. Der faltbare Roller (1) nach einem der Ansprüche 1 bis 6,
**dadurch gekennzeichnet,**
**dass** das Trittbrett (2) geeignete Mittel (22) zur Fixierung des Trittbretts (2) im gestreckten Zustand umfasst, vorzugsweise ist das geeignete Mittel (22) eine Schiebeverriegelung, die in einer Fixierungsposition über das Scharnier (21) übergreift und im Trittbrett (2) auf beiden Seiten des Scharniers (21) geführt gelagert ist.

8. Der faltbare Roller (1) nach Anspruch 7,
**dadurch gekennzeichnet,**
**dass** zumindest ein Scharnier (21) ein erstes Übersteckmittel (23) zum seitlichen Überstecken über das Trittbrett (2) im gestreckten Zustand aufweist.

9. Der faltbare Roller (1) nach einem der Ansprüche 1 bis 8,
**dadurch gekennzeichnet,**
**dass** die Drehachsen (R21) der Scharniere (21) im Wesentlichen parallel zur Drehachse (R2) der nicht-lenkbaren Achse des Rollers (1) angeordnet sind und zumindest das mittlere Scharnier (21b) oder eines der mittleren Scharniere (21b) ein zweites Übersteckmittel (24) zum seitlichen Überstecken über das Trittbrett (2) im gefalteten Zustand aufweist.

10. Der faltbare Roller (1) nach einem der Ansprüche 1 bis 9,
**dadurch gekennzeichnet,**
**dass** der Roller (1) einen klappbaren Lenker (4) mit einem ersten Klappgelenk (41) umfasst, wobei das erste Klappgelenk (41) so am Lenker (4) angeordnet ist, dass der Lenker (4) im gefalteten Zustand des Rollers (1) über das ziehharmonika-ähnliche zusammengefaltete Trittbrett (2) in Richtung des Hinterrads (5) des Rollers (1) gelegt werden kann.

11. Der faltbare Roller (1) nach Anspruch 10,
**dadurch gekennzeichnet,**
**dass** der Lenker (4) ein Arretierungsmittel (42) zur Fixierung des Lenkers (4) in einer aufrechten Fahrposition (FP) umfasst, vorzugsweise ist das Arretierungsmittel (42) eine bis zu einer Endposition über das erste Klappgelenkt (41) verschiebbare Hülse (42), wobei die Hülse (42) in der Endposition zur Fixierung des Lenkers (4) vorgesehen ist.

12. Der faltbare Roller (1) nach einem der Ansprüche 10 oder 11,
**dadurch gekennzeichnet,**
**dass** der Roller (1) eine Hinterradverkleidung (51) über dem Hinterrad (5) umfasst, vorzugsweise ist der Roller (1) ein motorangetriebener Roller (1) und umfasst eine Batterie (7) zum Antrieb eines Motors angeordnet auf der Hinterradverkleidung (51).

13. Der faltbare Roller (1) nach einem der Ansprüche 10 bis 12,
**dadurch gekennzeichnet,**
**dass** der Roller (1) ein Fixierungsmittel (52) zur Fixierung des Lenkers (4) im geklappten Zustand umfasst, wobei das Fixierungsmittel (52) mit dem Hinterrad (5) über geeignet Mittel fest verbunden ist, vorzugsweise ist das Fixierungsmittel (52) auf der Hinterradverkleidung (51) angeordnet.

14. Der faltbare Roller (1) nach einem der Ansprüche 12 oder 13,
**dadurch gekennzeichnet,**
**dass** der Lenker (4) eine Griffstange (43) umfasst, die an beiden Seiten der Griffstange (43) zu den Lenkergriffen (44) hin jeweils ein arretierbares zweites Klappgelenk (45) umfasst, sodass die Lenkergriffe (44) im geklappten Zustand des Lenkers (4) über die jeweiligen zweiten Klappgelenkte (45) zur Fixierung des Lenkers (4) an der Hinterradverkleidung (51) vorgesehen sind.

15. Ein Verfahren zum Auseinanderfalten eines faltbaren Rollers (1) mit Rädern nach Anspruch 1 mit einem zusammenfaltbaren Trittbrett (2), das mindestens drei Scharniere (21) zum ziehharmonika-ähnlichen Zusammenfalten des Rollers (1) umfasst, wobei das Verfahren die folgenden Schritte umfasst:
- Entnehmen des gefalteten Rollers (1), vorzugsweise aus einem Fahrzeug oder einer Verpackung,
- Stellen des Rollers (1) auf seine Räder (5, 6), die in Fahrtrichtung weiterhin vor und hinter dem zusammengefalteten Trittbrett (2) in Fahrposition verblieben sind und Auseinanderrollen der Räder (5, 6), wodurch das Trittbrett (2) in einen gestreckten Zustand (G) gebracht wird,
- Bringen eines Lenkers (4) des Rollers (1) nach oben in eine aufgerichtete Position und arretieren des Lenkers (4).

## Claims

1. Foldable scooter (1) with wheels (5, 6) for reducing a wheel distance (DR) in the folded state with a collapsible footboard (2),
**characterized in that**
the footboard (2) includes at least three hinges (21) for the accordion-like collapsing of the scooter (1), wherein the wheels (5, 6), in the collapsed scooter (1), still remain in driving position in front of and behind the collapsed footboard (2).

2. Foldable scooter (1) according to claim 1,
**characterized in that**
frame parts (8) of the scooter (1) in front of and behind the footboard (2) are connected by at least one cable (3) guided through and below the footboard (2) at a suitable cable tension for stabilizing the extended footboard (2) against a deflection in the load direction (B) of the footboard (2).

3. Foldable scooter (1) according to claim 2,
**characterized in that**
each cable (3) includes a suitable elastic means (31), preferably a spring (31) for resiliently supporting the footboard (2).

4. Foldable scooter (1) according to any one of claims 1 to 3,
**characterized in that**
at least the middle hinge (21b) or at least one of the middle hinges (21b) includes an elastic strip for the suspension of the footboard (2) in the extended state.

5. Foldable scooter (1) according to any one of claims 1 to 4,
**characterized in that**
the hinges (21) each include a stop that prevents that the footboard (2) or sections of the footboard (2) can be moved beyond the extended state towards the ground (10) below the footboard (2).

6. Foldable scooter (1) according to claim 5,
**characterized in that**
at least the respective two outer neighboring hinges (21a, 21b, 21c) of the footboard (2) are configured to be rotatable in the opposite sense of rotation, preferably all of the respectively neighboring hinges (21a, 21b, 21c) of the footboard (2) are configured to be rotatable in the opposite sense of rotation about their rotary axes (R21).

7. Foldable scooter (1) according to any one of claims 1 to 6,
**characterized in that**
the footboard (2) includes suitable means (22) for fixing the footboard (2) in the extended state, preferably the suitable means (22) is a slide latch, which in a fixing position reaches beyond the hinge (21) and is guided and supported on both sides of the hinge (21).

8. Foldable scooter (1) according to claim 7,
**characterized in that**
at least one hinge (21) comprises a first place-on means (23) for the lateral placement over the footboard (2) in the extended state.

9. Foldable scooter (1) according to any one of claims 1 to 8,
**characterized in that**
the rotary axes (R21) of the hinges (21) are arranged substantially parallel to the rotary axis (R2) of the non-steerable axis of the scooter (1), and at least the middle hinge (21b) or one of the middle hinges (21b) comprises a second place-on means (24) for the lateral placement over the footboard (2) in the extended state.

10. Foldable scooter (1) according to any one of claims 1 to 9,
**characterized in that**
the scooter (1) includes a collapsible handlebar (4) having a first hinged joint, wherein the first hinged joint (41) is arranged on the handlebar (4) in such a way, that in the folded state of the scooter (1), the handlebar (4) can be laid over the accordion-like, folded footboard (2) in the direction of the rear wheel (5) of the scooter (1).

11. Foldable scooter (1) according to claim 10,
**characterized in that**
the handlebar (4) includes an arresting means (42) for fixing the handlebar (4) in an upright driving position (FP), preferably the arresting means (42) is a sleeve (42) displaceable to an end position via the first hinged joint (41), wherein in the end position, the sleeve (42) is provided for fixing the handlebar (4).

12. Foldable scooter (1) according to any one of claims 10 or 11,
**characterized in that**
the scooter (1) includes a rear-wheel trim (51) over the rear wheel (5), preferably the scooter (1) is a motor-driven scooter (1) and includes a battery (7) for powering a motor arranged on the rear-wheel trim (51).

13. Foldable scooter (1) according to any one of claims 10 to 12,
**characterized in that**
the scooter (1) includes a fixation means (52) for fixing the handlebar (4) in the folded state, wherein the fixation means (52) is fixedly connected with the rear wheel (5) via suitable means, preferably the fixation means (52) is arranged on the rear wheel trim (51).

14. Foldable scooter (1) according to any one of claims 12 or 13,
**characterized in that**
the handlebar (4) includes a handle rod (43) which respectively includes an arrestable second hinged joint (45) on both sides of the handle rod (43) towards the handlebar grips (44), so that the handlebar grips (44), in the folded state of the handlebar (4), are provided for the fixation of the handlebar (4) on the rear wheel trim (51) via the respective second hinged joints (45).

15. Method for unfolding a foldable scooter (1) with wheels according to claim 1 with a collapsible footboard (2) that includes at least three hinges (21) for the accordion-like collapsing of the scooter (1), wherein the method comprises the following steps:
- taking out the folded scooter (1), preferably from a vehicle or a packaging,
- placing the scooter (1) on to its wheels (5, 6) having remained in driving position in front of and behind the collapsed footboard (2) in the direction of travel, and rolling the wheels (5, 6) apart, whereby the footboard (2) is brought into an extended state (G),
- bringing a handlebar (4) of the scooter (1) upwards into an upright position, and arresting the handlebar (4).

## Revendications

1. Trottinette (1) pliable avec des roues (5, 6) servant à réduire un empattement (DR) dans l'état plié avec un marchepied (2) pouvant être replié,
**caractérisée en ce que**
le marchepied (2) comprend au moins trois charnières (21) servant à replier à la manière d'un accordéon la trottinette (1), dans laquelle les roues (5, 6) restent, lorsque la trottinette (1) est repliée dans le sens de déplacement du reste devant et derrière le marchepied (2) replié en position de déplacement.

2. Trottinette (1) pliable selon la revendication 1,
**caractérisée en ce que**
des parties de cadre (8) de la trottinette (1) devant et derrière le marchepied (2) sont reliées à au moins un câble (3) guidé de part en part sous le marchepied (2) avec une tension de câble appropriée pour la stabilisation du marchepied (2) étiré et contre tout fléchissement dans le sens de contrainte (B) du marchepied (2).

3. Trottinette (1) pliable selon la revendication 2,
**caractérisée en ce que**
chaque câble (3) comprend un moyen (31) élastique approprié, de préférence un ressort (31), servant au soutien sur ressorts du marchepied (2).

4. Trottinette (1) pliable selon l'une quelconque des revendications 1 à 3,
**caractérisée en ce que**
au moins la charnière (21b) centrale ou au moins une des charnières (21b) centrales comprend une bande élastique servant à la suspension du marchepied (2) dans l'état étiré.

5. Trottinette (1) pliable selon l'une quelconque des revendications 1 à 4,
**caractérisée en ce que**
les charnières (21) comprennent respectivement une butée, qui empêche que le marchepied (2) ou des sections du marchepied (2) ne puissent être déplacés au-delà de l'état étiré par la suite en direction du sol (10) sous le marchepied (2).

6. Trottinette (1) pliable selon la revendication 5,
**caractérisée en ce que**
au moins les deux charnières (21a, 21b, 21c) adjacentes respectivement extérieures du marchepied (2) sont configurées de manière à pouvoir tourner dans le sens de rotation opposé, de préférence toutes les charnières (21a, 21b, 21c) respectivement adjacentes du marchepied (2) sont configurées de manière à pouvoir tourner autour de leurs axes de rotation (R21) dans le sens de rotation (S1, S2) opposé.

7. Trottinette (1) pliable selon l'une quelconque des revendications 1 à 6,
**caractérisée en ce que**
le marchepied (2) comprend des moyens (22) appropriés pour la fixation du marchepied (2) dans l'état étiré, de préférence le moyen (22) approprié est un verrouillage coulissant, qui surmonte, dans une position de fixation, la charnière (21) et est monté de manière guidée dans le marchepied (2) sur les deux côtés de la charnière (21).

8. Trottinette (1) pliable selon la revendication 7,
**caractérisée en ce que**
au moins une charnière (21) présente un premier moyen d'insertion en saillie (23) servant à être inséré de manière latérale en faisant saillie du marchepied (2) dans l'état étiré.

9. Trottinette (1) pliable selon l'une quelconque des revendications 1 à 8,
**caractérisée en ce que**
les axes de rotation (R21) des charnières (21) sont disposés de manière sensiblement parallèle par rapport à l'axe de rotation (R2) de l'axe non dirigeable de la trottinette (1) et au moins la charnière centrale (21b) ou une des charnières centrales (21b) présente un deuxième moyen d'insertion en saillie (24) servant à être inséré de manière latérale en faisant saillie du marchepied (2) dans l'état plié.

10. Trottinette (1) pliable selon l'une quelconque des revendications 1 à 9, **caractérisée en ce que**
la trottinette (1) comprend un guidon (4) rabattable avec une première articulation rabattable (41), dans laquelle la première articulation rabattable (41) est disposée de telle sorte au niveau du guidon (4) que le guidon (4) peut être placé dans l'état plié de la trottinette (1) au-dessus du marchepied (2) replié à la manière d'un accordéon en direction de la roue arrière (5) de la trottinette (1).

11. Trottinette (1) pliable selon la revendication 10,
**caractérisée en ce que**
le guidon (4) comprend un moyen d'arrêt (42) servant à fixer le guidon (4) dans une position de déplacement (FP) verticale, de préférence le moyen d'arrêt (42) est une douille (42) pouvant être coulissée jusqu'à une position finale au-dessus de la première articulation rabattable (41), dans laquelle la douille (42) est prévue dans la position finale aux fins de la fixation du guidon (4).

12. Trottinette (1) pliable selon l'une quelconque des revendications 10 ou 11, **caractérisée en ce que**
la trottinette (1) comprend un habillage de roue arrière (51) au-dessus de la roue arrière (5), de préférence la trottinette (1) est une trottinette (1) à entraînement motorisé et comprend une batterie (7) servant à entraîner un moteur disposé sur l'habillage de roue arrière (51).

13. Trottinette (1) pliable selon l'une quelconque des revendications 10 à 12, **caractérisée en ce que**
la trottinette (1) comprend un moyen de fixation (52) servant à fixer le guidon (4) dans l'état rabattu dans laquelle le moyen de fixation (52) est relié de manière solidaire à la roue arrière (5) par l'intermédiaire des moyens adaptés, de préférence le moyen de fixation (52) est disposé sur l'habillage de roue arrière (51).

14. Trottinette (1) pliable selon l'une quelconque des revendications 12 ou 13, **caractérisée en ce que**
le guidon (4) comprend une tige de poignée (43), qui comprend, au niveau des deux côtés de la tige de poignée (43) en direction des poignées de guidon (44), respectivement une deuxième articulation rabattable (45) pouvant être arrêtée de sorte que les poignées de guidon (44) sont prévues dans l'état rabattu du guidon (4) par moyen des deuxièmes articulations rabattable (45) respectives aux fins de la fixation du guidon (4) au niveau de l'habillage de roue arrière (51).

15. Procédé servant à déployer une trottinette (1) pliable avec des roues selon la revendication 1 avec un marchepied (2) repliable, qui comprend au moins trois charnières (21) servant à replier de manière similaire à un accordéon la trottinette (1), dans lequel le procédé comprend les étapes suivantes :
- le retrait de la trottinette (1) pliée de préférence d'un véhicule ou d'un emballage,
- le placement de la trottinette (1) sur ses roues (5, 6), qui sont restées dans le sens de déplacement du reste devant et derrière le marchepied (2) replié en position de déplacement, et l'écartement par roulement des roues (5, 6), ce qui permet d'amener le marchepied (2) dans un état étiré (G),
- l'amenée d'un guidon (4) de la trottinette (1) vers le haut dans une position droit et l'arrêt du guidon (4).
